Europäisches Patentamt

European Patent Office

Office européen des brevets

(10)

(11) Publication number: **0 262 319**

**B1**

(12) **EUROPEAN PATENT SPECIFICATION**

(45) Date of publication of patent specification: 03.10.90

(51) Int. Cl.⁵: **B 43 L 13/02,** G 01 D 15/24, G 06 K 15/16

(21) Application number: 87110489.9

(22) Date of filing: 20.07.87

(54) **Device and process for paper feed in a plotter and cutting apparatus.**

(30) Priority: 24.07.86 ES 8600543

(43) Date of publication of application:
06.04.88 Bulletin 88/14

(45) Publication of the grant of the patent:
03.10.90 Bulletin 90/40

(84) Designated Contracting States:
AT BE CH DE FR GB IT LI LU NL SE

(56) References cited:
DE-A-3 306 541
FR-A-2 539 724
US-A-4 227 644

PATENT ABSTRACTS OF JAPAN, vol. 6, no. 193
(M-160)1071r, 2nd October 1982, page 97 M 160;
& JP-A-57 100 087 (CANON K.K.) 22-06-1982

PATENT ABSTRACTS OF JAPAN, vol. 4, no. 164
(M-41)646r, 14th November 1980, page 88 M 41;
& JP-A-55 113 572 (RICOH K.K.) 02-09-1980

(73) Proprietor: INVESTRONICA S.A.
Tomás Breton, 62
E-28045 Madrid-7 (ES)

(72) Inventor: Alcantara Perez, Bernardo
c/ Rioja No. 13 - 4B
Madrid (ES)
Inventor: Becerra Carrasco, Rodrigo
c/ Urbanización 109 Villas f-17 Pozuelo Estacion
Madrid (ES)
Inventor: Panizo Robles, Pedro
c/ Robles No. 22 Pozuelo de Alarcon
Madrid (ES)

(74) Representative: Puschmann, Heinz H. et al
Spott und Puschmann Patentanwälte
Sendlinger-Tor-Platz 11
D-8000 München 2 (DE)

(56) References cited:
PATENT ABSTRACTS OF JAPAN, vol. 6, no. 199
(M-162)1077r, 8th October 1982, page 86 M 162;
& JP-A-57 105 381 (COPAL K.K.) 30-06-1982

# Description

Summary (voluntary contribution, of no legal value): The subject of this invention is the design of a mechanism for the feed of the paper in a flat plotter for drawing, which is cheap and has a high level of operational reliability.

The mechanism consists of a reduction motor which rolls up the paper after it has passed through the drawing zone; in the drawing head an optical line reader is fitted which is designed to read a trace made by the drawing tool once drawing has been completed in one window; when this trace is detected, a stop command is delivered to the rolling reducer motor. Once the paper feed has stopped, in order to exactly join and continue the drawing of the following window in the correct form, the drawing tool carries out a search for the trace at very low speed. When the line has been detected in this process, the plotter continues with the drawing operation in the correct place.

This application is connected in part with no. 550.267 "Automatic plastic drawing and ruling machine".

## a) Introduction
### 1. Scope of the Invention

This invention relates to drawing machines, also known as plotters, which are used as information output terminals in computer-assisted design equipment. More particularly, the machine which is described is especially suitable for use in the clothing industry or in any other of similar characteristics as to the type of pieces used, the accuracy required, the density of lines per unit of area drawn, etc., which make necessary a cheap drawing medium, since large amounts thereof are used.

In this type of industry, it is also necessary to make patterns which are used as production control elements. Such patterns are made of materials which are more resistant than paper, e.g. cardboard or plastic. The preparation of these patterns is also dealt with here.

### 2. Background

The operating principles of drawing plotters, in their two basic versions, drum and flat types, and including some mixed models, are well-known; also well-known are the advantages and disadvantages of one type of technology or the other (see FR—A—2 280 148 in the name of Uri Leder of the Californian Company COMPUTER PRODUCTS INC).

Nevertheless, the application of this technology to the clothing industry means that existing plotters are not usable, for a variety of reasons from the high costs of large plotters developed for the aeronautical and automobile industries, or those used to mark with high flatness precision on the table, to those of purely dimensional type for use in technical offices.

In particular for this industry, the drum plotter which is the subject of Spanish Patent No. 509082 was designed, which makes it possible to handle rolls of paper of up to 150 m, but which have the disadvantage that they require perforated paper.

Likewise, for the preparation of the patterns, until now, machines have been proposed which are separate from those for the drawing, and which use a laser or blade as cutting tool; this requires special support surfaces, using a vacuum as the securing element. This means that pattern production is expensive.

## b) Summary of the Invention

The subject of this invention is the design of a mechanism for the control of the paper feed in a flat drawing plotter, which is cheap and has a high level of operational reliability.

The mechanism consists of a reduction motor which rolls up the paper which has passed through the drawing zone. In the drawing head, an optical lines reader is fitted which is intended to read a trace made by the drawing tool at the end of drawing in one window; when this trace is detected, a stop order is sent to the roller reduction motor. Then, when the paper feed has stopped, in order to make the join exactly and continue with the drawing of the following window in the correct manner, the drawing tool makes a search for the trace at very low speed. When the line has been found in this process, the plotter continues the drawing operation at the correct point.

## c) Brief Description of the Drawings

In order to complement the description to be given below, and to ensure better understanding of the characteristics of the invention, these specifications are accompanied by a set of drawings forming an integral part hereof and which, by way of illustration and without limitation, show the following:

Fig. 1 is a perspective view of the machine.

Fig. 2 is a schematic representation of the paper position.

Fig. 3 is a schematic ground plan view of the machine.

Fig. 4 is a perspective view of the drive of the X and Y axes.

Fig. 5 is a side view of the table, showing the bars which secure the paper on the table.

Fig. 6 is a view of the tool for drawing on and lining plastic for patterns and the assembly of the optical detector.

Fig. 7 is a function diagram of the machine according to Fig. 1.

## d) Description of the Machine

In order to give an idea of the machine as a whole to which the mechanism is applicable, and the operation of this use, a brief description is hereby given.

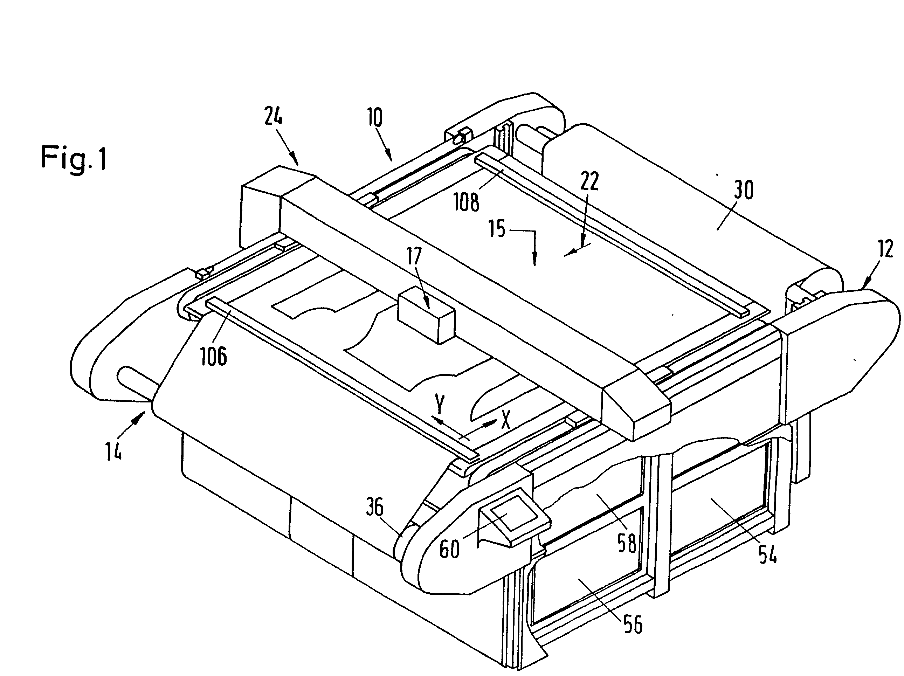

Figure 1 is a schematic view of the whole of the machine which is the subject of this patent, showing the drawing zone (10), the power-supply unit (12) and the collection assembly (14). The drawing zone (10) is, basically, a table, over which the paper (15) is extended on which the drawing operation is to be carried out; the drawing tool (17), supported by the X=Y assembly (24), is able to move over the entire surface of the table.

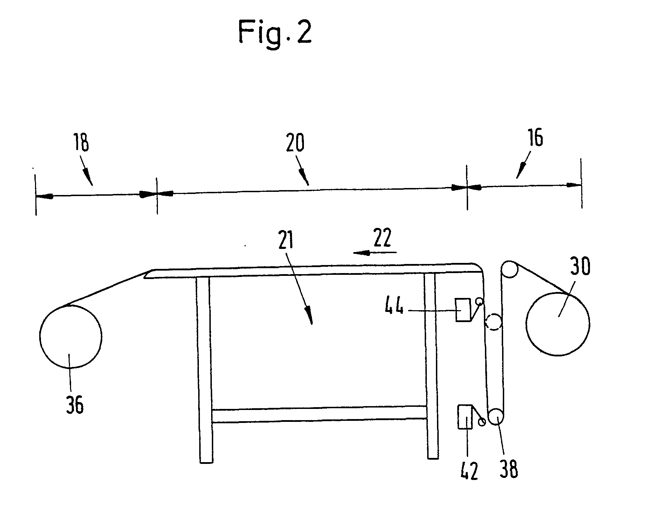

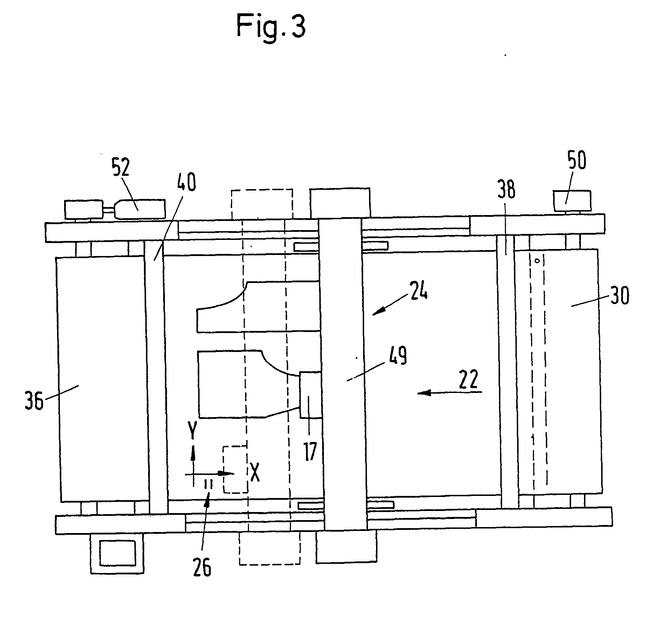

Figure 2 shows, in diagrammatic form, a side view of the machine, with the feed zone (16) associated with the supply unit (12), the collection zone (18) associated with the collection assembly (14) and the drawing zone (20) with the table (21). Here, the feed paper roll (30) and the collection roll (36) can be seen, with the idler in the feed zone (38) and the stroke limiters (42) (44) in the feed zone. This same zone contains the brake (50) seen in figure 3, which prevents the reel (30) from racing under the influence of the said idler (38) and releasing paper uncontrollably; in the collection zone is the reduction motor (52) which is responsible for gathering up the paper, as necessary, in accordance with instructions from the controller, when the optical detector fitted on carriage (17) detects a line drawn for these purposes, as will be seen later. Figures 1, 2 and 3 show the direction of feed of the paper with the arrow marked 22. Under the table (21) in the drawing zone (20), a controller is installed for the machine, divided into the modules for feed sources (54), control (56) and servo units and power (58). The said controller is connected to the exterior by means of an I/O standardised data line and the control panel (60).

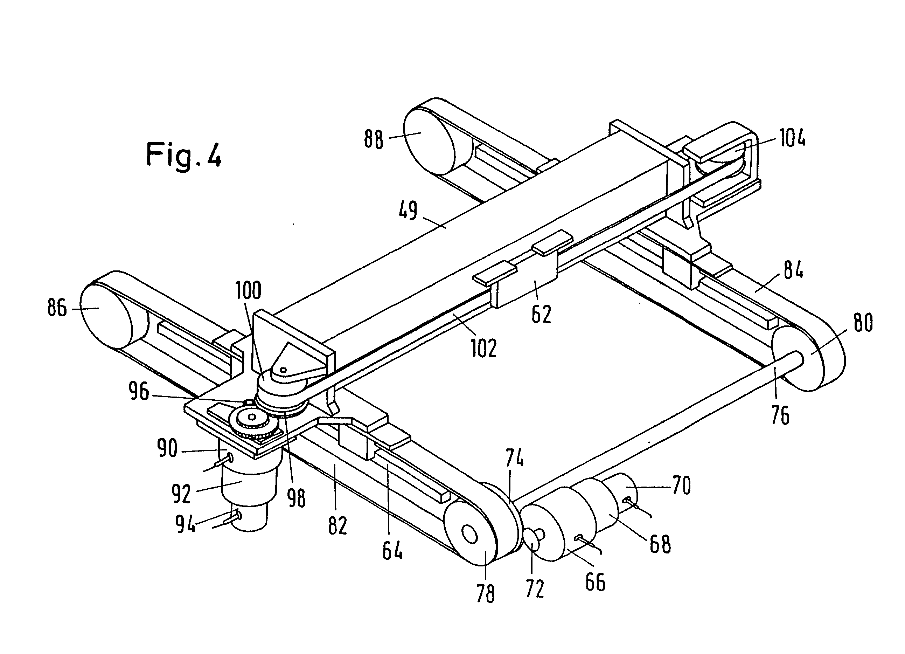

As has already been mentioned, the drawing tool (17) which is fitted on the X=Y assembly (24) moves in the drawing zone (20) over the surface of the table (21). As can be seen in detail in figure 4, this assembly is made up of an X carriage (49) and a Y carriage (62); the former is sited at right angles to the guides (64) placed on either side of the table and parallel to the direction X, so that the Y carriage, which moves on guides fitted along carriage (49), moves in direction Y in an ortogonal system of coordinate axes. Both axes move in accordance with the same principle so that the X axis will be described only. The motor (66) is driving with reduction (72—74) the shaft (76) which runs across the drawing table from one side to the other; at both ends of the said shaft are the toothed pulleys (78 and 80) around which run belts (82 and 84) which are held under tension by the tensor pulleys (86 and 88). Carriage (49) is driven by the said belts (82 and 84 to which it is fitted. The following elements are fitted on the carriage (49): the Y motor (90), the tachometer (92), the transducer (93), the gears (96 and 98), the drive pulley (100), belt (102) and the tensor pulley (104) for the movement of the Y carriage (62). In this way, under the action of the command signal sent to the motor (66) from the servo/powder module (58) of the controller, the drawing tool (17) is able to move, together with the carriage (49) in its forward movement and the backward movement and, likewise, parallel to the direction X; in the same way, the motor (90) moves the drawing tool (17) along the carriage (49), backwards and forwards (i.e. a movement at right angles to the previous one) so that, with a combination of both these, it is possible to draw any figure on the X=Y plane.

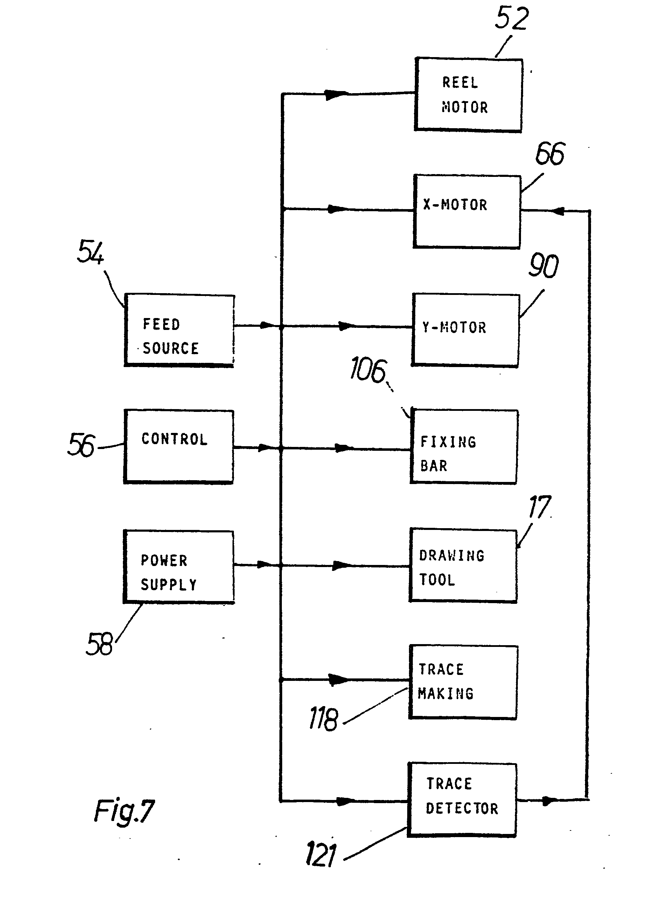

The more specific reason for this application is the movement and control of the paper feed for the correct connection of the drawings for two successive windows. Usually, the panels to be drawn, or groups of these, are larger than the useful drawing area, so that this machine makes it possible to move the paper forward a pre-set distance to be called "window width" which means that the real useful length of the drawing will be limited only by the size of the reel of paper placed on the feed end. Thus, when the controller has delivered all the information which can be drawn in the window in the drawing zone at that time and the machine has done this, two traces are drawn (26) which are just a small distance apart, parallel to the Y axis of the machine and in an area which is adjacent to the one where the drawing has been done. The controller immediately sends several simultaneous commands (fig. 3); to the carriage (49) which moves at maximum speed to a point to the left of the window, to the carriage (17) which moves to an ordinate such that the tip of the optical detector (12) in figure 7 fitted on the carriage (17) can detect the traces (26) drawn previously, and, finally, to the reducer motor (52), to start it up and feed the paper. Once carriage 17 is in position (see the trace line in figure 3), a command is sent to the optical detector (120) to drop until its tip is in contact with the paper.

As soon as the optical pen (120) sees the lines (26) pass, the controller orders the reduction motor (52) to stop; because of the inertia, this does not occur instantaneously but, moreover, because of the increase in radius of the collector reel (36), the distance travelled by the lines (26) since they passed under the optical detector and until the paper stops varies continuously. Thus, once the paper has stopped, the light pen (121) begins to look for the position where the lines stopped; for this, the assembly (49) moves slowly in direction X, negative, (Fig. 3), and when it find them once more, the controller orders the assembly (49) to stop immediately; as the position of the lines (26) is the reference for where drawing was left off, the drawing process can continue with the drawing lines which were interrupted perfectly joined up.

During this process (Fig. 2), the idler (38) on the feed end rises, supplying the paper from the loop which it forms; as soon as it leaves the stroke limiter (42), the controller sends the brake (30) an intermittent on-off signal so that, because of the weight of the idler (38), the roll of paper (30) begins to turn anti-clockwise, so feeding the paper to the loop which is formed by the said idler. Because of the high level of inertia of the roll of paper, this movement is slower than the one caused by the bridge's dragging of the paper, and the ilder (38) rises, although not so far as to come into contact with the stroke limiter (44) which would stop the machine; on the other hand, the on-off signal to the brake prevents the feed paper roll (30) from acquiring much speed, so that the size of the brake to be used is considerably reduced. Emphasis must be made here on the "isolating" effect of the feed roll (30), which has a high level of inertia, as opposed to the feed of the paper by the carriage (49), since all that has to be moved is the small inertia of the idler (38).

The process which is described on the feed side is stopped when the idler (38) once more comes into contact with the stroke limiter (42) which interrupts the on-off signal to the brake so that the brake comes off, as, in these conditions, does that for the movement of the reel (30).

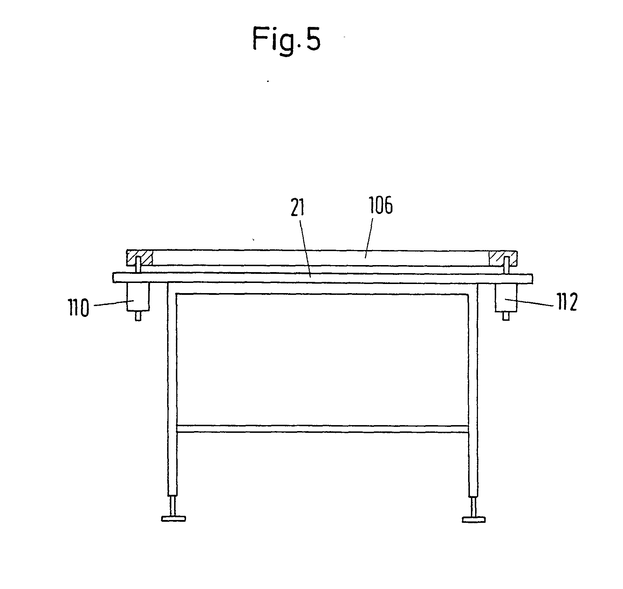

In order to prevent any unwanted movement of the paper while the drawing process is going on, on both sides of the drawing zone are bars for fixing the paper on the table (106, 108). Figure 5 shows one of the bars (106) and the driving electromagnets (110 and 112) which raise the bar when the paper is to be fed through.

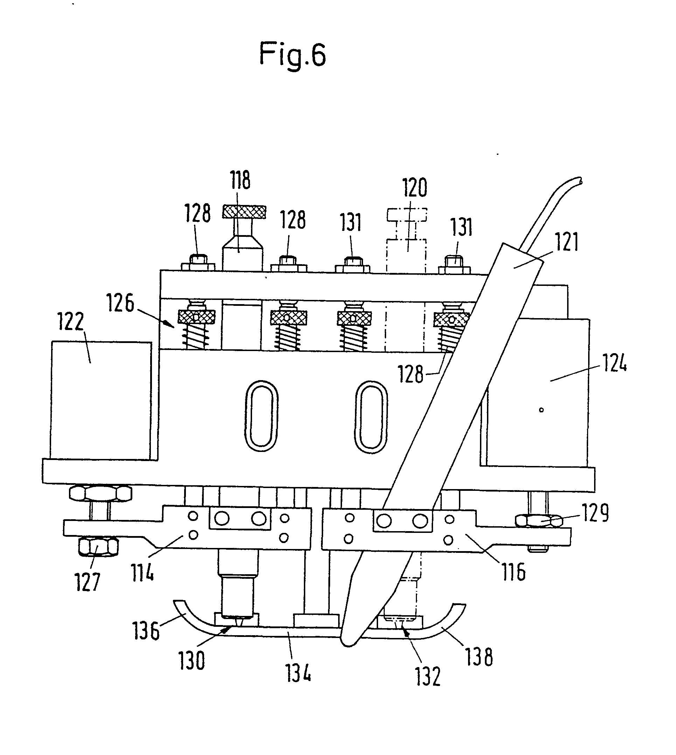

The drawing tool (17) is shown in greater detail in Fig. 6. Essentially, it consists of two small carriages (114, 116) with a vertical movement; the drawing tool itself is mounted on one of these carriages (118). Normally, for this type of machine, it has a large capacity. On the other small carriage is the tool for ruling plastic (120) for the preparation of the patterns (drawn in broken lines). Each of the said small carriages is operated by electromagnets (122, 124) with withdrawal under the action of springs (126, 128); the stroke is adjusted by means of screws 127 and 129, and 128 and 131. It may be that the edges of the paper are not firmly secured on the table in the area of carriage (49); to prevent the tip (130) of the pen (118) or of the plastic ruling tool (132) from buckling it when either of them returns to the paper from outside the edges, the bottom of the tool has a skid (134) with forms (136 and 138). Likewise, as can be seen from fig. 6, on the small carriage 116, as an alternative to the ruling tool, a light pen (121) can be fitted, since the drawing and plastic ruling operations are mutually exclusive.

Having this given the description in these specifications, it must be emphasised that the details of the design of the idea set out may be varied, i.e. they may undergo small variations, always based on the fundamental principles of the said idea which are, basically, those set out in the paragraphs of the description given. In fact, Article 48 of the current Industrial Property Act, at paragraph three, provides that "changes of shape, size, proportions and materials of a patented object" may not be patented, thus enshrining the legislator's criterion to the effect that, once an idea has been patented which may give rise to a practical and marketable reality, no-one may make use of that on the pretext of having introduced slight modifications in order to submit as new and as belonging to it.

**Claims**

1. Method for range (window)-wise paper (15) feeding in an automatically controlled flat bed plotter (10), comprising paper feeding (30) and collecting (36) rolls, XY-carriage (24) for displacing drawing and/or cutting tools (118) within a drawing zone (20), clamping mechanisms (106, 108) for fixing the paper during drawing and/or cutting actions and controller (54, 56, 60) for controlling the feeding and drawing and/or cutting actions, characterized by the steps of

a) making traces (26) on the paper (15) by the drawing tool (118) within a definite area parallel to the Y-axis at the end of each drawing action,

b) thereupon shifting the XY-carriage (49/17) with maximum speed in the feeding direction (22) of the paper (15) to the left of the drawing zone (20) into an area which will be reached by said traces (26) on the following feeding action,

c) feeding of the paper (15) with high feeding speed rangewide until said traces (26) are sensed by a sensor (121) on the XY-carriage (49/17),

d) after stopping the paperfeed replacing the XY-carriage (49/17) with low speed in negative X-direction until said sensor and said traces are exactly aligned whereupon the next drawing action is started for generating drawing lines without interruptions in successive drawing actions within adjacent predetermined ranges corresponding to the drawing zone (20).

2. Method according to claim 1, characterized in that two traces (25) are made by the drawing tool (118) at the end of each drawing action.

3. Method according to claims 1 and 2, characterized in that an optical tracing takes place.

4. Apparatus for feeding paper (15) in an automatically controlled flat bed plotter (10) comprising paper feeding (30) and collecting (36) rolls, XY-carriage (24) for displacing drawing and/or cutting tools (118) within a drawing zone (20), clamping mechanisms (106, 108) for fixing the paper during drawing and/or cutting actions and controller (54, 56, 60) for controlling the feeding and drawing and/or cutting actions, whereby the drawing zone (20) in X-direction is smaller than the length of the whole drawing to be executed on the paper, characterized in that for defining the exact position for the drawing tool to continue executed drawing lines without interruption during the successive drawing action after paper feeding a sensor (121) is mounted to the Y-carriage (17) for sensing traces (26) made at the end of a foregoing drawing action by the drawing tool (118) mounted to the Y-carriage (17), whereby said drawing tool (118) and said sensor (121) are carried by vertically moveably mounted support (114, 116) which are actuated by coordinated electromagnets (122, 124) each.

5. Apparatus according to claim 4, characterized in that said sensor is a light pen (121), whereby the light pen (121) is held in continuous contact with the paper during the detection process.

6. Apparatus according to claim 4 and 5, characterized in that the two supports (114, 116) operating by electromagnets (122, 124) against the action of springs (126, 128), whereby the stroke of said tools and sensor can be adjusted by screws (127, 128, 129, 131).

## Patentansprüche

1. Verfahren für das abschnittsweise (fensterweise) Zuführen von Papier (15) in einem automatisch gesteuerten Flachbett-Plotter (10), mit einer Papier-Zuführwalze (30) und einer Aufwickelwalze (36), eine in X- und Y-Richtung über einen Zeichenbereich (20) bewegliche eine Zeichen- und/oder ein Schneidgerät (17) tragende Schlitten-Einheit (24), mit Klemmvorrichtungen (106, 108), die das Papier während des Zeichen- und/oder Scheneidvorganges festhalten und mit einem Controller (54, 56, 60) zur Steuerung des Papiertransports und der Zeichen- und/oder Schneidvorgänge, gekennzeichnet durch folgende Verfahrensschritte:

a) Anbringen einer Markierung (26) durch das Zeichengerät (17) auf dem Papier (15) innerhalb eines definierten, zur Y-Achse parallelen Bereichs am Ende eines jeden Zeichenvorganges,

b) Zurückfahren der Schlitten-Einheit (24) für die X-/Y-Richtung mit Höchstgeschwidigkeit in Transportrichtung (22) des Papiers (15) an den linken Rand des Zeichenbereichs (20) in einen Bereich, den die Markierung (26) auf dem Papier beim nachfolgenden Papiervorschub erreicht,

c) Zuführen des Papiers (15) mit hoher Geschwindigkeit in den Zeichenbereich bis die Markierung (26) von einem Sensor (121) an dem Zeichengerät (17) detektiert wird,

d) Abschalten der Papierzufuhr und langsames Rückführen des Zeichengeräts (17) in entgegengesetzter Richtung bis Sensor und Markierung exakt übereinanderstehen, hiernach Auslösen eines neues Zeichenvorgangs als kontinuierliche, ununterbrochene Fortführung von nacheinander erstellter Zeichungslinien innerhalb nebeneinanderliegender, dem Zeichenbereich jeweils entsprechender, vorbestimmter Bereiche.

2. Verfahren nach Anspruch 1, dadurch gekennzeichnet, daß am Ende jedes Zeichenvorganges eine aus zwei Marken bestehende Markierung (26) durch das Zeichengerät (17) aufgebracht wird.

3. Verfahren nach Anspruch 1 und 2, dadurch gekennzeichnet, daß die Markerung (26) optisch abgetastet wird.

4. Einrichtung zur Zuführung von Papier (15) in einem automatisch gesteuerten Flachbett-Plotter (10), mit einer Papierzuführungswalze (30) und einer Papier-Aufwickelwalze (38), eine in X-/Y-Richtung bewegliche Schlitten-Einheit (24, 49, 62) zur Bewegung eines Zeichengeräts und/oder eines Schneidwerkzeugs (17) in einem Zeichenbereich (20), mit Klemmvorrichtungen (106, 108) zum Festhalten des Papiers während eines Zeichen- und/oder Schneidvorganges sowie mit einem Controller (54, 56, 60) zur Steuerung des Papiertransports und des Zeichen- und/oder Schneidvorganges, wobei der Zeichenbereich (20) in X-Richtung kleiner ist als die Gesamtlänge der auf dem Papier zu erstellenden Zeichnung, dadurch gekennzeichnet, daß zwecks Positionierung des Zeichengeräts (17) zu Beginn eines nachfolgenden Zeichenvorganges exakt auf das Ende der zuvor aufgezeichneten Linien nach dem Papiervorschub ein Sensor (121) vorgesehen ist, der am Y-Schlitten (62) zur Abtastung von Markierungen (26) angeordnet ist, die vom Zeichenwerkzeug (118) am Ende jedes vorhergehenden Zeichenvorganges auf das Papier aufgetragen worden sind, wobei das Zeichenwerkzeug (118) und der Sensor (121) jeweils an einem senkrecht verschiebbaren Träger (114, 116) angeordnet und über aufeinander abgestimmte Elektromagnete (122, 124) betätigbar sind.

5. Einrichtung nach Anspruch 4, dadurch gekennzeichnet, daß der Sensor ein Lichtschreiber (121) ist, und daß der Lichtschreiber (121) während des Abtastvorganges auf dem Papier aufgesetzt ist.

6. Einrichtung nach den Ansprüchen 4 und 5, dadurch gekennzeichnet, daß die beiden Träger (114, 116) über Elektromagnete (122, 124) entgegen der Kraft von Federn (126, 128) betätigbar sind und daß der Hub der Zeichen und/oder Schneidwerkzeuge und des Sensors über Schrauben (127, 128, 129, 131) einstellbar sind.

## Revendications

1. Procédé pour alimenter en papier (15) sur cadres ou fenêtres une table de traçage à plat (10) commandée automatiquement, comprenant des rouleaux d'alimentation (30) et de renvidage (36) de papier, un chariot XY (24) pour déplacer les outils (118) de traçage et/ou de découpage dans une zone de traçage (20), des mécanismes de pincement (106, 108) pour fixer le papier pendant les opérations de traçage et/ou de découpage et une commande (54, 56, 60) pour commander les opérations d'alimentation et de traçage ou de découpage, caractérisé par les étapes suivantes:

a) constitution de trace (26) sur le papier (15) par l'outil de traçage (118) dans une surface définie parallèle à l'axe des Y à la fin de chaque opération de traçage,

b) décalage subséquent du chariot XY (49/17) à vitesse maximale dans la direction d'alimentation (22) du papier (15) vers la gauche de la zone de traçage (20) dans une zone qui sera atteinte par lesdites traces (26) lors de l'opération d'alimentation suivante,

c) alimintation en papier (15) sur la largeur d'un cadre et à haute vitesse d'alimentation jusqu'à ce que lesdites traces (26) soient détectées par un détecteur (121) sur la chariot XY (49/17),

d) après arrêt de l'alimentation en papier, la remise en place du chariot XY (49/17) à vitesse basse dans la direction des X négatifs jusqu'à ce que ledit détecteur et lesdites traces soient exactement alignés, l'opération de traçage suivante étant alors commencée pour consituer des lignes de tracé sand interruption lors d'opérations successives de traçage dans des cadres adjacents prédéterminés correspondant à la zone de traçage (20).

2. Procédé selon la revendication 1 caractérisé par le fait que deux traces (25) sont constituées par l'outil de traçage (118) à la fin de chaque opération de traçage.

3. Procédé selon les revendications 1 et 2 caractérisé en ce qu'un traçage optique a lieu.

4. Appareil d'alimentation en papier (15) d'un traceur à plat (10) commandé automatiquement comprenant des rouleaux d'alimentation (30) et de renvidage (36) du papier, un chariot XY (24) pour déplacer les outils de traçage et/ou de découpage (118) dans une zone de traçage (20), des mécanismes de pincement (106, 108) pour fixer la papier pendant les opérations de traçage et/ou le découpage et une commande (54, 56, 60) pour commander les opérations d'alimentation et de traçage et/ou de découpage, la zone de traçage (20) étant plus petite dans la direction X que la longueur de l'ensemble du tracé à exécuter sur la papier, caractérisé en ce que, pour définir la position exacte pour l'outil de traçage, afin de continuer les lignes de tracé exécutées sans interruption pendant les opérations de traçage successives après alimentation en papier, un détecteur (121) est monté sur le chariot Y (17) pour détecter des traces (26) constituées à la fin de l'opération de traçage précédent par l'outil de traçage (118) monté sur le chariot Y (17), ledit outil de traçage (118) et ledit détecteur (121) étant portés par un support monté mobile verticalement (114, 116), ces éléments étant commandés par des électroaimants coordonnés (122, 124).

5. Appareil selon la revendication 4, caractérisé en ce que ledit détecteur est un photostyle (121) ledit photostyle (121) étant maintenu en contact permanent avec le papier pendant le processus de détection.

6. Appareil selon l'une des revendications 4 et 5 caractérisé en ce que les deux supports (114, 116) sont commandés par les électroaimants (122, 124) à l'encontre de l'action de ressorts (126, 128), la course desdits outils et dudit capteur pouvant être réglée par des vis (127, 128, 129, 131).

Fig.1

EP 0 262 319 B1

# Fig.2

# Fig.3

Fig. 4

# Fig. 5

# Fig.6

**Fig.7**

52 — REEL MOTOR

66 — X-MOTOR

54 — FEED SOURCE

90 — Y-MOTOR

106 — FIXING BAR

56 — CONTROL

58 — POWER SUPPLY

17 — DRAWING TOOL

118 — TRACE MAKING

121 — TRACE DETECTOR